**Europäisches Patentamt**

(19) **European Patent Office**

**Office européen des brevets**

(11) Publication number : **0 291 353 B1**

## (12) EUROPEAN PATENT SPECIFICATION

(45) Date of publication of patent specification :
**14.09.94 Bulletin 94/37**

(51) Int. Cl.⁵ : **G06F 13/40**

(21) Application number : **88304404.2**

(22) Date of filing : **16.05.88**

(54) Microcomputers.

(30) Priority : **14.05.87 JP 117509/87**

(43) Date of publication of application :
**17.11.88 Bulletin 88/46**

(45) Publication of the grant of the patent :
**14.09.94 Bulletin 94/37**

(84) Designated Contracting States :
**DE FR GB NL**

(56) References cited :
**US-A- 3 765 002**
**US-A- 3 938 094**
**IBM TECHNICAL DISCLOSURE BULLETIN,**
**vol. 18, no. 4, September 1975, pages**
**1026-1027, New York, US; F.R. ROSSI: "End of**
**bit line sensing system"**
**E.D.N. ELECTRICAL DESIGN NEWS, vol. 31,**
**no. 21, October 1986, pages 162-172,174,176,**
**Newton, Massachusetts, US; J. TITUS:**
**"Special report: DSP ICs"**

(73) Proprietor : **SONY CORPORATION**
**7-35 Kitashinagawa 6-chome**
**Shinagawa-ku**
**Tokyo 141 (JP)**

(72) Inventor : **Watanabe, Nobushisa c/o Patent**
**Division**
**Sony Corporation**
**6-7-35 Kitashinagawa**
**Shinagawa-ku**
**Tokyo 141 (JP)**

(74) Representative : **Cotter, Ivan John et al**
**D. YOUNG & CO.**
**21 New Fetter Lane**
**London EC4A 1DA (GB)**

# Description

This invention relates to microcomputers.

Currently used microcomputers often include, on a single silicon chip, a central processing unit (CPU), a read only memory (ROM), a random access memory (RAM), an input/output interface (I/O), and a timer or clock circuit.

The CPU of such devices includes a register, an arithmetic unit (ALU) and an internal data bus which is used to transfer data between the register and ALU. These devices further include an external data bus which is used in conjunction with the internal bus to move data to peripheral circuits.

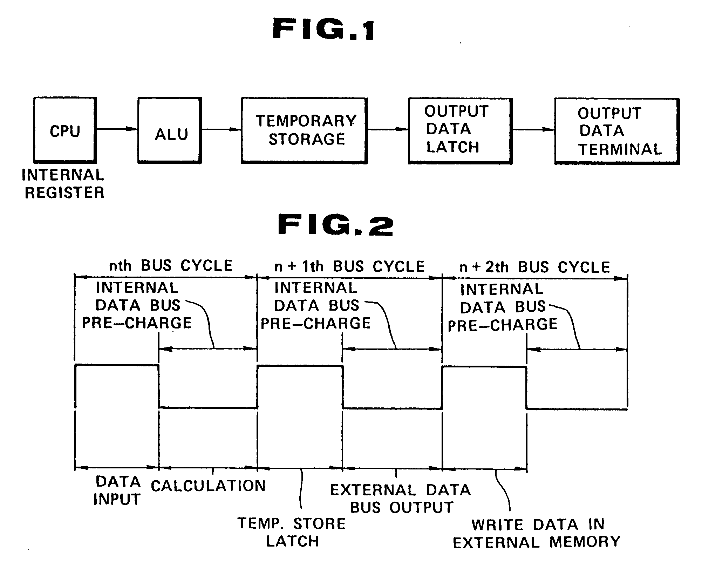

Figure 1 of the accompanying drawings shows an example of how previously proposed such devices have managed the movement of data.

Data from the internal register of the CPU is inputted to the ALU and subsequently processed. The result is latched in a temporary register. This data is then transferred to the internal data bus, latched in an output data latch and outputted therefrom to the external data bus. The data appearing on the output terminal of the chip is transferred into a memory located externally of the chip on which the CPU and ALU are formed.

Figure 2 of the accompanying drawings depicts the number of bus cycles required to achieve the above-mentioned data transfer. In the first half of a first bus cycle (nth bus cycle), data from the internal register is inputted to the ALU. In the latter half of the same cycle, data is processed and, at the same time, the internal bus is pre-charged. During the first half of the next cycle ((n+1)th cycle) the temporary charge is stored by temporarily latching it. During the second half of this cycle, data is outputted to the external bus, and, in the first half of the (n+2)th cycle, the data is written into an external memory.

Thus, as will be clear, there is a delay of a full bus cycle between the cycle in which data is inputted to the ALU and the cycle in which data from the CPU is actually written into memory. In this case, the result from the ALU is determined during the first half of the (n+1)th cycle but, even though the processing is complete, a total of three full bus cycles is required to transfer the data.

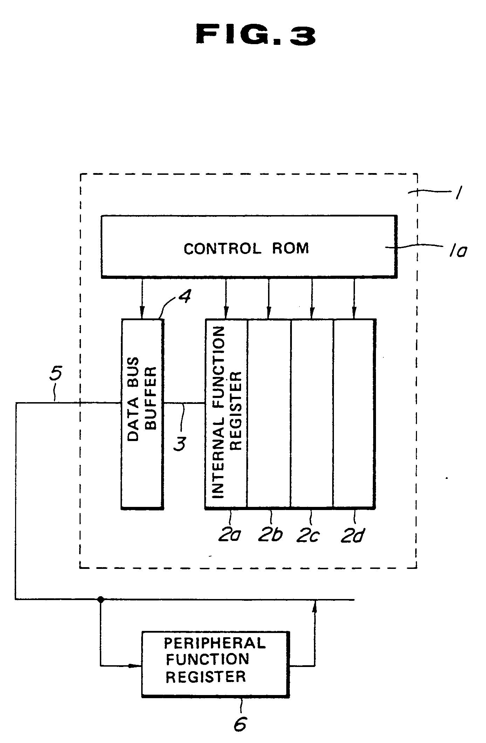

In addition to the foregoing, previously proposed devices have included circuit arrangements such as that shown in Figure 3 of the accompanying drawings. In Figure 3, a CPU 1 includes a ROM (control ROM) la, and internal function registers 2a, 2b, 2c, and 2d which act as a program counter, a common use register, a stack pointer, an accumulator, and a program status word, respectively. The internal function registers 2a to 2d are connected by way of an internal databus 3, a data buffer 4 and an external bus 5 to a peripheral function register 6.

Data contained in the internal function registers 2a to 2d is transferred to the peripheral function register 6 through the internal bus 3, data buffer 4 and external bus 5, while in the reverse instance data in the peripheral function register is supplied via the same path.

With this type of arrangement, the rate at which the bus can actually move data is insufficiently high to meet high speed processing requirements and hampers the attainment of currently required data speed handling and management targets.

United States Patent US 3 938 094 and IBM Technical Disclosure Bulletin, vol. 18, no. 4, September 1975, pages 1026-1027 disclose systems utilizing precharging to speed up data transfer.

Respective different aspects of the invention are set forth in the appended claims.

Embodiments of the invention described hereinbelow are intended to increase data transfer speed using simple hardware arrangements.

In brief, to speed up data transfer, one embodiment of the invention features a transmission gate arrangement which pre-charges and transfers data in internal and external buses with the same timing and which further initialises the internal bus and a device such as an ALU, every bus cycle. A second embodiment speeds up the data transfer in the internal and external buses per se by providing two data transfer paths through the interconnected buses and reducing the combined resistances of the internal and external buses in the order of 50%. Advantageously, to maximise the increase in data transfer speed, the two embodiments can be combined.

The invention will now be further described, by way of illustrative and non-limiting example, with reference to the accompanying drawings, in which:

Figure 1 is a block diagram depicting operations performed by a previously proposed arrangement;

Figure 2 is a timing chart showing stages involved in moving data from a CPU to an external memory in the arrangement of Figure 1;

Figure 3 is a circuit diagram showing a previously proposed circuit arrangement;

Figure 4 is circuit diagram of an arrangement for speeding up data transfer;

Figure 5A to 5D are timing charts showing various signals which are produced and/or utilised during the operation of the arrangement shown in Figure 4; and

Figure 6 is a circuit diagram of a further arrangement for speeding up data transfer.

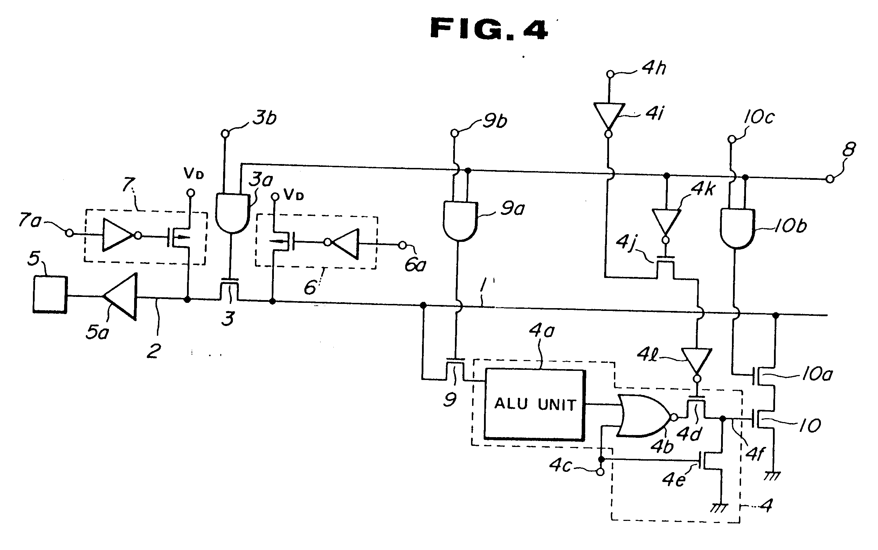

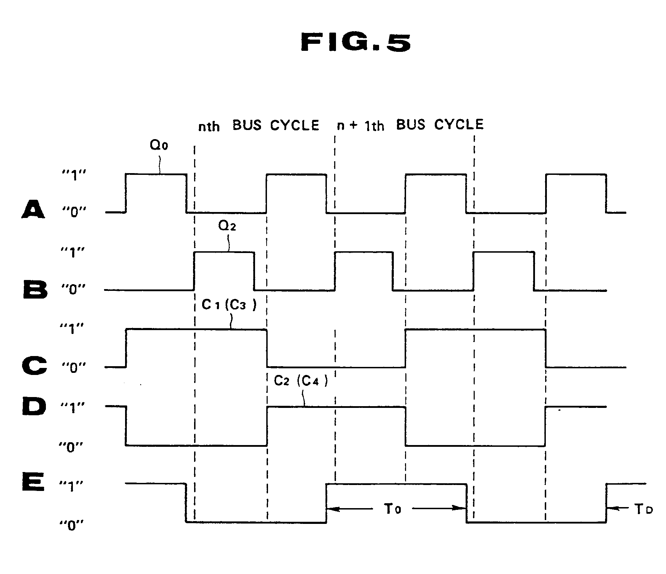

Figure 4 shows a circuit arrangement in which a CPU internal bus 1 and an external data bus 2 are connected by a transmission gate formed of an n-channel metal oxide semiconductor field effect transistor (MOSFET) 3. The transmission gate 3 is connected to an output of an AND-circuit or gate 3a. One input terminal 3b of the AND-circuit 3a is supplied with a control signal C1 which is produced by a control circuit of the microcomputer as will be described hereinbelow with reference to Figure 2C, while another input terminal is supplied with a bus cycle clock pulse signal Q0 which is shown in Figure 5A and which is applied to a pulse cycle input terminal 8.

The external bus 2 is connected via a buffer circuit 5a to an output terminal 5. The internal and external buses 1 and 2 are connected to respective precharge circuits 6 and 7 in a manner to be supplied with a precharge voltage VD. The precharge circuits 6 and 7 have input terminals 6a and 7a, respectively, which are supplied with control signals in the form of a second bus cycle clock pulse signal Q2 as shown in Figure 5B. When this signal assumes a high level "1", the internal and external data buses 1 and 2 precharge and assume a high level, by way of example.

The bus cycle pulse signals Q0 and Q2 are arranged to have the same period (that is, the same bus cycle time) and are arranged so that, as shown in Figure 5, when one assumes a high level "1" the other assumes a low level "0", and vice versa.

The control signal C1 is arranged so that, during the (n-1)th cycle, it assumes a high level at a timing coincident with a leading edge of the signal Q0 and remains at a high level until the next leading edge of the signal Q0 appears in the nth cycle. Accordingly, the signal C1 rises to a high level in every other bus cycle.

The internal bus 1 is connected to an ALU arrangement by way of an n-channel MOSFET 9. Specifically, the internal bus 1 is connected to the drain of the MOSFET 9 while the source of the MOSFET 9 is connected to an input terminal of the ALU arrangement. The gate of the MOSFET 9 is connected to an output of an AND-circuit or gate 9a. One input terminal 9b of the AND-circuit 9a is connected to receive a control signal C2 as shown in Figure 5D. This signal is produced by the control circuit of the microcomputer. Another input terminal of the AND-circuit 9a, is connected to receive the bus cycle clock pulse signal Q0. As shown in Figure 5D, the second control signal C2 is arranged to assume a low level when the signal C1 assumes a high level, and vice versa. Accordingly, the MOSFET 9 assumes an ON state when the bus cycle clock pulse signal Q0 assumes a high level.

An output terminal of an ALU unit 4a, which forms part of an assembly 4, is connected to one input terminal of a NOR-circuit or gate 4b. Another input terminal of the NOR-circuit 4b is connected to a terminal 4c which is supplied with the second bus cycle clock pulse signal Q2. An output of the NOR-circuit 4b is connected to the drain of an n-channel MOSFET 4d. The source of the MOSFET 4d is connected to the gate of a MOSFET 10. Further, in the present arrangement, the source of the MOSFET 4d is connected to the drain of a MOSFET 4e which forms part of an initialisation circuit. The source of the MOSFET 4e is grounded and its gate is connected to the terminal 4c.

The node 4f defined between the MOSFETs 4d, 4e and 10 is such as to adopt a low level "0" when the second bus cycle clock pulse signal Q2 assumes a high level "1".

A terminal 4h associated with an inverter 4i is supplied with a control signal C4 which, as shown in Figure 5D, is identical to the control signal C2. This signal is supplied by way of the inverter 4i to the drain of an n-channel MOSFET 4j. The source of the MOSFET 4j is connected by way of an inverter 4l to the gate of the MOSFET 4d.

The first bus cycle signal input terminal 8 is connected by way of an inverter 4k to the gate of the MOSFET 4j. Accordingly, with this arrangement the signal shown in Figure 5e is produced. As shown, this signal is such as to assume a high level "1" in the (n-1)th cycle until the occurrence of a trailing edge of the signal Q0. The signal remains at the low level "0" until such time as the next trailing edge of the signal Q0 occurs just prior to the end of the nth cycle. Following this, the signal remains at a high level "1" until such time as the next trailing edge of the signal Q0 occurs in the (n+1)th cycle.

The source of the MOSFET 10 is grounded and the drain is connected to the source of an n-channel MOSFET 10a. The drain of the MOSFET 10a is connected to the internal bus 1 while the gate thereof is connected to an output of an AND-circuit or gate 10b. One input of the AND-circuit 10b is connected to an input terminal 10c which receives a control signal C3 as shown in Figure 5C. Another input of the AND-circuit 10b is connected to the terminal 8 so as to receive the first bus cycle clock pulse signal Q0. With this arrangement, when the signal Q0 assumes a high level "1" the MOSFET 10a is induced to assume an ON state.

The remaining construction and arrangement of the circuit shown in Figure 4 is essentially the same as found in conventional arrangements, whereby a detailed explanation thereof will be omitted for the sake of brevity.

With the above-described arrangement, during the first half of the nth bus cycle, when the signal Q2 assumes a high level "1", the MOSFET 4e is rendered ON and the signal appearing on the node 4f assumes a low level. This causes the ALU arrangement to be initialised. Following this, in the last half of the nth cycle, while the signal Q0 remains at a high level "1", the MOSFET (input gate) 9 is maintained ON and, during this period, data in an internal register of the CPU (not shown) of the microcomputer is inputted to the ALU arrangement. In addition to this, the MOSFET 4d is conditioned to assume an ON state and the signal shown in Figure 5E rises to a high level "1" until a leading edge of the signal Q2 is produced in the (n+1)th cycle. This maintains the signal in question at a high level for a time To. In response to the signal Q2 assuming a low level "0" in the (n+1)th cycle, the result produced by the ALU arrangement is subject to a timing latching at the node 4f.

Next, during the period To in the (n+1)th cycle when the MOSFET 4d is ON, while the signal QO is at a high level "1" the MOSFET 10a is rendered ON, and data indicative of the result of the ALU arrangement processing is transferred through the MOSFET 10a, the internal bus 1, the transmission gate 3, the external bus 2 and the buffer circuit 5a to the output terminal 5.

While the bus cycle clock pulse signal Q2 is at a high level "1", the node 4f is initialised via discharge. That is, while the bus cycle clock pulse signal Q2 is at the high level the signal appearing on the node 4f becomes "0", with the result that the adjacent MOSFET (transmission gate) 4d goes ON. This induces the signal appearing at the node 4f to either remain at a low level "0" or change from "1" to "0". As a result, the MOSFET 10a is ON and data is transferred to the data bus 1 before the outcome of the ALU processing, so that pre-charging of the internal data bus 1 is not required.

Accordingly, during the above-mentioned (n+1)th bus cycle, the data latched on the node 4f is directly transferred to the internal and external data buses 1 and 2 and driven to the output terminal 5, thus rendering it possible to achieve the required data management in 2 data bus cycles. This of course reduces the number of bus cycles required and enables the desired tasks to be achieved in a shorter time. Further, with the present arrangement, as the internal and external data buses are subject to the same timing, and as data is being transferred, it is not necessary to perform individual data input and output latches between the input and output buses, and it is possible to omit the pre-charging operations. This permits an advantageous simplification in hardware.

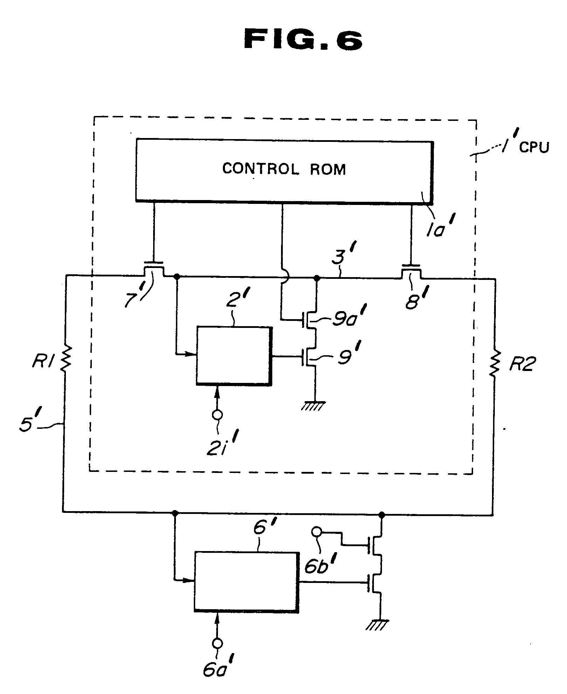

In Figure 6, for the sake of clarity, only a single internal register 2' is illustrated. However, it is to be understood that this single register is representative of devices such as a program counter, stack pointer, accumulator, and program password type registers.

As shown, the internal register 2' is connected to an internal data bus 3' and to the gate of a MOSFET 9'. The source of the MOSFET 9' is connected to the source of another MOSFET 9a'. The drain of the MOSFET 9a' is connected to the internal data bus 3' while the gate thereof is connected to a control ROM 1a' of a CPU 1' in a manner to be supplied with a predetermined control signal. That is, when the MOSFET 9a' is ON the data in the internal register 2' is supplied to the internal data bus 3'. A terminal 2i' receives a signal which indicates that data is to be written into the internal register 2'. In this arrangement, the input terminal 2i' is operatively connected to the ROM 1a' to receive said predetermined signal.

In the present arrangement, the internal data bus 3' is provided with two transmission gates 7' and 8', each of which is an n-channel MOSFET. The drain of the gate 7' and the source of the gate 8' are connected to "outboard portions" of the internal bus 3' while the source of the gate 7' is connected to the drain of the gate 8' through the portion of the bus extending therebetween. A peripheral function register 6' is connected in parallel with an external bus 5' in a manner to be operatively connected with the gates 7' and 8' in the illustrated manner.

The peripheral function register 6' has a terminal 6a' for receiving a read control signal from the ROM 1a', and a terminal 6b' for receiving a read out control signal.

It will be noted that, in this drawing, the internal and external data buses are illustrated by a single line. However, this is only for the sake of illustration. In an 8 bit type one chip microprocessor, these buses would in fact include 8 lines (or 16 lines in the case of a 16 bit machine, and so forth).

In the present arrangement, when data is transferred from the internal register 2' to the peripheral function register 6' (the internal and external buses being previously precharged), the control ROM 1a' outputs a control signal to the gate of the MOSFET 9a' which renders it ON. Data from the internal function register 2' is transferred to the internal bus 3' via the gates 7' and 8', which are also rendered ON. From the internal bus 3', the data enters the external bus 5' and is transferred into the peripheral function register 6' in the presence of a control signal from the control ROM 1a' appearing on the terminal 6a'. In this case, data from the internal register 2' is supplied to the internal and external buses in two separate directions.

If the resistances of the two paths are represented by R1 and R2 respectively, the resistance developed between the internal and peripheral registers 2' and 6' can be represented as follows:

$$R = R1 \times R2/R1 + R2.$$

Assuming, for the sake of explanation, that R1 = R2, it can be seen that the resistance of the arrangement shown in Figure 6 is half that of an arrangement in which data is transferred in one direction only. The same effect exists when data is transferred from the peripheral register 6' to the internal register 2'.

As will be appreciated, this marked reduction in resistance enables data to be physically transferred with less resistance and therefore faster. The arrangement of Figure 6 enables data to be moved faster and, if combined with the arrangement of Figure 4, which reduces the number of bus cycles necessary for any given data transfer, produces a combined effect which is highly advantageous in promoting high speed processing by speeding up the rate at which data can be moved within the system.

## Claims

1. A microcomputer comprising:

a central processor unit (1') which includes a first register(2') and an internal bus (3'), the internal bus (3') having first and second ends;

an external bus (5') having first and second ends, the first end of the external bus (5') being connected to the first end of the internal bus (3') through a first transmission gate means (7', 9', 9a'); and

a second register (6') operatively connected to the external bus (5'); characterised in that

the second end of the external bus (5') is connected to the second end of the internal bus (3') through a second transmission gate means (8', 9', 9a') and

the first and second transmission gate means are operable to transfer data between the first and second registers (2', 6') via the internal and external buses (3', 5').

2. A microcomputer as claimed in claim 1, comprising:

an arithmetic unit (4a) within the central processor unit; and wherein said first and second transmission gate

means are operable for pre-charging and transferring data into the internal bus and the external bus with the same timing, and further for initialising the arithmetic unit and the internal bus on every bus cycle.

## Patentansprüche

1. Mikrocomputer, mit:

einer Zentraleinheit (1'), die ein erstes Register (2') und einen internen Bus (3') aufweist, wobei der interne Bus (3') ein erstes und zweites Ende hat;

einem externen Bus (5'), der ein erstes und zweites Ende hat, wobei das erste Ende des externen Busses (5') mit dem ersten Ende des internen Busses (3') über erste Durchlaßtormittel (7', 9', 9a') verbunden ist; und

einem zweiten Register (6'), das im Betrieb mit dem externen Bus (5') verbunden ist; dadurch gekennzeichnet,

daß das zweite Ende des externen Busses (5') mit dem zweiten Ende des internen Busses (3') über zweite Durchlaßtormittel (8', 9', 9a') verbunden ist, und

daß die ersten und zweiten Durchlaßtormittel betreibbar sind, um Daten zwischen dem ersten und zweiten Register (2', 6') über den internen und externen Bus (3', 5') zu übertragen.

2. Mikrocomputer nach Anspruch 1, mit:

einer Arithmetik-Einheit (4a) innerhalb der Zentraleinheit; und wobei die ersten und zweiten Durchlaßtormittel betreibbar sind, um Daten in den internen Bus und den externen Bus mit der gleichen Zeitsteuerung zu laden und zu übertragen, und um weiter die Arithmetik-Einheit und den internen Bus bei jedem Buszyklus zu initialisieren.

## Revendications

1. Micro-ordinateur comprenant :

une unité centrale de traitement (1') qui comporte un premier registre (2') et un bus interne (3'), le bus interne (3') ayant une première et une deuxième extrémité ;

un bus externe (5') possédant une première et une deuxième extrémité, la première extrémité du bus externe (5') étant connectée à la première extrémité du bus interne (3') par l'intermédiaire d'un premier moyen formant une porte de transmission (7', 9', 9a') ; et

un deuxième registre (6') fonctionnellement connecté au bus externe (5');

caractérisé en ce que :

la deuxième extrémité du bus externe (5') est connectée à la deuxième extrémité du bus interne (3') par l'intermédiaire d'un deuxième moyen formant une porte de transmission (8', 9', 9a'), et

les premier et les deuxième moyens portes de transmission ont pour fonction de transférer des données entre les premier et deuxième registres (2', 6') via les bus interne et externe (3', 5').

2. Micro-ordinateur selon la revendication 1, comprenant :

une unité arithmétique (4a) disposée à l'intérieur de l'unité centrale de traitement ; et

où lesdits premier et deuxième moyens portes de transmission ont pour fonction de précharger et de transférer des données dans le bus interne et le bus externe avec la même synchronisation et, en outre, d'initialiser l'unité arithmétique et le bus interne à chaque cycle de bus.

## FIG.1

| INTERNAL REGISTER | | | |
|---|---|---|---|
| CPU | ALU | TEMPORARY STORAGE | OUTPUT DATA LATCH | OUTPUT DATA TERMINAL |

## FIG.2

nth BUS CYCLE — INTERNAL DATA BUS PRE-CHARGE

n + 1th BUS CYCLE — INTERNAL DATA BUS PRE-CHARGE

n + 2th BUS CYCLE — INTERNAL DATA BUS PRE-CHARGE

DATA CALCULATION INPUT

TEMP. STORE LATCH

EXTERNAL DATA BUS OUTPUT

WRITE DATA IN EXTERNAL MEMORY

# FIG.3

# FIG. 4

EP 0 291 353 B1

# FIG. 5

# FIG.6